# EUROPÄISCHE PATENTANMELDUNG

(11) **EP 0 992 457 A1**
(43) Veröffentlichungstag der Anmeldung: **12.04.2000**
(21) Anmeldenummer: 99118072.0
(22) Anmeldetag: 23.09.1999
(51) Int. Cl.: C01G 31/00, C09C 1/00

(54) **Verfahren zur Herstellung von Bismutvanadat**

(30) Priorität: 06.10.1998 DE 19846010
(71) Anmelder: BAYER AG, 51368 Leverkusen (DE)
(72) Erfinder: Schittenhelm, Hans-Joachim, Dr., 51065 Köln (DE); Günnel, Horst, 47906 Kempen (DE)

(57) **Zusammenfassung**

Verfahren zur Herstellung von kristallinem Bismutvanadat in dem eine Bismut- und Vanadium-haltige salpetersaure Suspension einer Scherbeanspruchung unterworfen wird, die so gebildete Bismutvanadat-Suspension filtriert wird, das abfiltrierte Bismutvanadat-Material gewaschen und getrocknet wird, dadurch gekennzeichnet, daß die Herstellung des Bismutvanadats zyklenweise erfolgt, wobei ein Filtrat vor der Pigmentwäsche abgetrennt und im nachfolgenden Zyklus als Ausgangsmaterial für eine neue Bismut- und Vanadium-haltige salpetersaure Suspension unmittelbar eingesetzt wird.

## Beschreibung

Die Erfindung betrifft ein Verfahren zur Herstellung von Bismutvanadat unter Vermeidung von umweltbelastenden Reststoffen.

Cadmium-, Blei- und Chrom(VI)-haltige anorganische Pigmente werden aus ökologischer und toxikologischer Sicht kritisch bewertet (DE-A 2 727 863; DE-A 3 135 281). Daher finden die gelbfärbenden Bismutvanadat-Pigmente zunehmend Interesse für Einfärbungen in Kunststoffen und Lacken.

Bismutvanadat-Pigmente sind in einer Vielzahl von Varianten bekannt. In der Literatur sind Zirkon-haltige (DE-A 4 040 849), Phosphor-haltige (DE-A 4 200 925), Molybdän- und Wolfram-haltige (DE-A 3 221 338, JP 13 135 85), Aluminium- und Silizium-haltige (DE-A 2 727 865) sowie Erdalkali-, Zink-, Molybdän-, Wolfram-, Niob- und Phosphor-haltige (EP-A 0 441 101) Bismutvanadate beschrieben. Zudem sind Bismutvanadate bekannt, die keine Fremdelemente enthalten (DE-A 2 727 864; DE-A 3 315 850; DE-A 41 19 668).

Zur Herstellung dieser Bismutvanadat-Typen stehen zahlreiche Verfahrensvarianten zur Verfügung. Den Stand der Technik einschließlich einer Bewertung sollen folgende vier Gruppen wiedergeben:

In einer Gruppe 1 werden mechanisch gut vermischte Bismut- und Vanadium-haltige Ausgangsprodukte in Form von Oxiden, Hydroxiden oder Carbonaten durch Glühen zu Bismutvanadaten zersetzt (DE-C 27 27 865; DE-C 33 15 850; DE-C 33 15 851). Ein Vorteil ist hier ein Minimum an umweltbelastenden Reststoffen, da von Kohlendioxid abgesehen keine Umweltbelastung auftritt. Ein entscheidender Nachteil sind aber Bismutvanadat-Pigmente minderer Farbqualität.

In einer Gruppe 2 werden Nitrat-haltige Rohprodukte durch Glühen zersetzt. Hierzu gehören mechanisch gut vermischte Feststoffe sowie intensiv gemahlene Bismut- und Vanadium-haltige salpetersaure Suspensionen (DE-A 41 19 668). Ein Vorteil sind Bismutvanadat-Pigmente höherer Farbqualität. Als Reststoffe entstehen jedoch nitrose Gase, deren Freisetzung als erheblicher umweltbelastender Nachteil zu werten ist.

In einer Gruppe 3 werden amorphe Bismutvanadate als Zwischenprodukte aus Lösungen von Bismut(III)-Salzen und Alkali- bzw. Ammonium-Vanadaten ausgefällt. Die Umsetzung zu kristallinem Bismutvanadat geschieht durch Glühen (DE-C 27 27 863; DE-A 27 27 864; DE-A 40 40 849) oder durch Alterung (EP-A 0 430 888). Ein Vorteil sind Bismutvanadat-Pigmente hoher Farbqualität. Als zusätzlichen Vorteil bietet die Alterung den Wegfall der Energie-intensiven Pigmentglühung. In jedem Fall stellen aber die Salz-belasteten Filtrate einen wesentlichen Nachteil dar.

In einer Gruppe 4 werden Bismut- und Vanadium-haltige salpetersaure Suspensionen durch intensives Rühren zu kristallinem Bismutvanadat umgesetzt (EP-A 0 723 998). Vorteile sind hier ein farbstarkes Bismutvanadat mit enger Teilchengrößenverteilung und die Einsparung einer Pigmentglühung. Ein Nachteil ist aber ein Säure-belastetes Filtrat.

Für die großtechnische Herstellung eines Bismutvanadat-Pigments ist ein Optimum aus Produktqualität, Wirtschaftlichkeit und Umweltverträglichkeit anzustreben. Im Hinblick auf diese Vorgaben offenbart der Stand der Technik einen erheblichen Handlungsbedarf: Während in der Gruppe 1 eine hohe Umweltverträglichkeit auf Kosten der Farbqualität erzielt wurde, lassen die höherwertigen Bismutvanadat-Qualitäten der Gruppen 2 bis 4 dagegen erhebliche Mengen an umweltbelastenden Reststoffen entstehen, deren Aufarbeitung bzw. Wiederverwendung nicht vorgesehen wird.

Wirtschaftlich vorteilhaft könnte die Rückführung von Reststoffen in den Herstellprozeß sein. Hierzu bieten die Verfahren von Gruppe 2 und 3 keinerlei Ansatzpunkte. Die nitrosen Gase der Gruppe 2 können bestenfalls durch eine separate Aufarbeitung anderweitig genutzt werden. Die Verfahren der Gruppe 3 haben den entscheidenden Nachteil, daß die Ausgangsprodukte jeweils separat in einer Säure und einer Lauge gelöst sind. So geht mit der Bismutvanadat-Fällung eine Säure/Base-Reaktion einher. Daher wird das Filtrat für den Herstellprozeß wertlos und muß demzufolge ebenfalls einer separaten Aufarbeitung zugeführt werden.

Einen Ansatzpunkt für eine Rückführung von Reststoffen in den Herstellprozeß lassen die salpetersauren Suspensionen der Gruppe 4 offen. Hier sind die Ausgangsprodukte ebenso wie das spätere Endprodukt in einer wäßrigen Salpetersäure dispergiert. Im Hinblick auf die Bismutvanadat-Ausbeute muß die wäßrige Salpetersäure (gemäß den Beispielen in EP-A 0 723 998) gegen Ende der Reaktion stark mit Wasser verdünnt werden. Eine denkbare Rückführung des Filtrats wäre demzufolge mit einer kostenintensiven Aufkonzentrierung verbunden.

Aufgabe war es daher, ein wirtschaftliches Herstellverfahren für Bismutvanadate hoher Farbqualität unter weitestgehender Vermeidung von umweltbelastenden Reststoffen zu entwickeln.

Die Lösung der Aufgabe besteht nunmehr darin, den in EP-A 0 723 998 geforderten Verdünnungsschritt fortfallen zu lassen. Überraschenderweise ist es außerdem gelungen, in dem Filtrat erneut ein Bismutvanadat ohne Qualitätsverlust herzustellen.

Gegenstand der Erfindung ist daher ein Verfahren zur Herstellung von kristallinem Bismutvanadat, in dem eine Bismut- und Vanadium-haltige salpetersaure Suspension einer Scherbeanspruchung unterworfen wird, die so gebildete Bismutvanadat-Suspension filtriert wird, das abfiltrierte Bismutvanadat-Material gewaschen und getrocknet wird, dadurch gekennzeichnet, daß die Herstellung des Bismutvanadats zyklenweise erfolgt, wobei ein Filtrat vor der Pigmentwäsche abgetrennt und im nachfolgenden Zyklus als Ausgangsmaterial für eine neue Bismut- und Vanadiumhaltige salpetersaure Suspension unmittelbar eingesetzt wird.

Für die erfindungsgemäße Herstellung von Bismutvanadat werden in einem ersten Zyklus salpetersaure Suspensionen aus Bismut(III)oxid und Vanadium(V)oxid oder Bismutylnitrat und Vanadium(V)oxid nacheinander zusammengeführt und einer Scherbeanspruchung, beispielsweise Rühren unterworfen. Es hat sich bewährt, die flüssigen Bestandteile wie Salpetersäure und Wasser als wäßrige Salpetersäure vorzulegen und von den Feststoffen zuerst das Bismut-haltige und danach das Vanadium-haltige Ausgangsprodukt einzutragen. Im Hinblick auf eine möglichst kurze Reaktionsdauer ist das Bismut(III)oxid dem Bismutylnitrat vorzuziehen, weil die Vorreaktion Bi₂O₃ + 2HNO₃ = 2BiONO₃ + H₂O ein besonders reaktives Ausgangsmaterial entstehen läßt.

So ergibt sich als vorteilhafte Ausführungsform der Eintrag von Bismut(III)oxid in eine 20 bis 30 Gew.-%ige der Dichte 1,12 bis 1,18 g/cm³, vorzugsweise 22 bis 25 Gew.-%ige wäßrige Salpetersäure der Dichte 1,13 bis 1,15 g/cm³, wobei innerhalb von wenigen Minuten unter Wärmeentwicklung eine 50 bis 60°C heiße, grün- bis gelb-stichig weiße, stark geflockte Suspension gebildet wird. In dieser Suspension wird nun das Vanadium(V)oxid dispergiert. Insgesamt werden soviel Bismut(III)oxid und Vanadium(V)oxid zugesetzt, daß deren Anteil 40 bis 46 Gew.-%, vorzugsweise 42 bis 44 Gew.-% beträgt und das Molverhältnis Bismut zu Vanadium in der Säure zwischen 1,0 und 1,2, vorzugsweise 1,08 und 1,12 liegt.

Die Umsetzung zu Bismutvanadat gibt sich zu Beginn an einem hellgelben Farbumschlag zu erkennen. Im weiteren Verlauf wird in exothermer Reaktion eine brillantgelbe Masse von sahneartiger Konsistenz gebildet.

Die Reaktion kann in einem geschlossenen oder offenen Aggregat durchgeführt werden. Falls die Apparatur offen betrieben wird, geht der Bismutvanadat-Umsatz aufgrund der Wärmeentwicklung mit einem Wasserverlust einher, so daß der Säuregehalt in der Suspension ansteigt.

Nach dem Abkühlen aufeine Temperatur unterhalb von 30°C wird die Pigment-Suspension filtriert. Hierfür stehen bewährte Techniken zur Verfügung. Ein im Labormaßstab übliches Verfahren ist das Absaugen auf einer Nutsche. Hiermit lassen sich zunächst 40 bis 50 Gew.-% der wäßrigen Salpetersäure abtrennen, 60 bis 50 Gew.-% verbleiben am Pigment. Durch Nachführen von Wasser über den auf der Nutsche befindlichen Filterkuchen läßt sich der Abtrenngrad bis auf ca. 95 Gew.-% erhöhen. In einem größeren Herstellmaßstab können Filterpressen eingesetzt werden, die erfahrungsgemäß eine noch höhere Ausbeute gestatten.

Für die erfindungsgemäße Rückführung muß die wäßrige Salpetersäure vor der Pigmentwäsche abgetrennt werden. Hierbei ist es wichtig, daß ein bestimmter Verdünnungsgrad nicht unterschritten wird. Als Kriterium hierfür bietet sich die Dichte an. So ist es vorteilhaft, die Dichte des Filtrats während der Wassernachführung zu verfolgen.

Zu Beginn der Wasserzugabe wird ein weiterer Teil der wäßrigen Salpetersäure unverdünnt vom Filterkuchen verdrängt. Dieser zeichnet sich durch konstant hohe Werte aus. Im weiteren Verlauf gelangt das nachgeführte Wasser ins Filtrat verbunden mit einer Abnahme der Dichte auf 1,22 bis 1,16 g/cm³. So hat es sich bewährt, soviel Wasser nachzuführen, daß der Dichteverlust nicht weniger als 6,0 und nicht mehr als 6,5 % beträgt. Unter diesen Bedingungen wird in Abhängigkeit vom Säuregehalt der Ausgangssuspension eine 20 bis 30 Gew.-%ige Salpetersäure erhalten, in der unumgesetzte Bismut- und Vanadiumverbindungen in Mengen von 50 bis 100 g/l bzw. 1 bis 10 g/l, jeweils bezogen auf Bismut bzw. Vanadium, gelöst sind.

Nach der Abtrennung der kontrolliert verdünnten Flüssigkeit wird das leuchtend gelbe Bismutvanadat einer Pigmentwäsche unterzogen. Es wird nun solange mit Wasser gewaschen, bis die Leitfähigkeit im Waschwasser nicht mehr als 50 µS·cm⁻¹ beträgt Hierbei fällt eine ca. 0,4 Gew.-%ige wäßrige Salpetersäure an, in der ca. 1 g/l Bismut und 0,05 g/l Vanadium gelöst sind.

In einem zweiten Zyklus wird die Bismut- und Vanadium-haltige wäßrige Salpetersäure erfindungsgemäß in eine Suspension überführt, die in Menge und Stöchiometrie mit der im ersten Zyklus zu Bismutvanadat umgesetzten Suspension übereinstimmt. Die hierzu notwendigen Mengen an neuen Ausgangsprodukten lassen sich aus den Analysendaten berechnen.

In Anlehnung an die im ersten Zyklus bewährte Abfolge in der Zusammenführung der Ausgangsprodukte wird zunächst der filtrationstechnisch bedinge Verlust an Salpetersäure und Wasser ausgeglichen. Danach wird das Bismut(III)oxid eingetragen. Nach dem Abschluß der Vorreaktion zwischen dem Bismut(III)oxid und der Salpetersäure wird das Vanadium(V)oxid dispergiert. Der Nitratgehalt des Filtrats schließt die im ersten Zyklus gegebene Möglichkeit aus, Bismutylnitrat anstelle von Bismut(III)oxid als Rohstoff verwenden zu können.

Die erneute Umsetzung zu kristallinem Bismutvanadat sowie Filtration der Pigment-Suspension, Abtrennung eines kontrolliert verdünnten Filtrats und Bismutvanadat-Wäsche geschehen in gleicher Weise wie im ersten Zyklus.

Die Bismutvanadat-Pigmente aus dem ersten und zweiten Zyklus zeigen in einem lufttrocknenden Lack ein leuchtendes, brillantes farbreines Gelb. Als Maß für die Farbqualität werden in Anlehnung an EP-A 0 723 998 die Gelbsättigung b*, die Farbsättigung C* sowie die Helligkeit L* aus dem CIELAB-Farbsystem nach DIN 6174 herangezogen.

Die Bismutvanadat-Pigmente aus beiden Zyklen zeichnen sich nun dadurch aus, daß jede der Farbkoordinaten b*, C* und L* einen Wert ≥ 85 aufweist. Dies ist in Übereinstimmung mit dem in EP-A 0 723 998 hergestellten Material. Demnach führt die Wiederverwendung des Filtrats in dem erfindungsgemäßen Herstellverfahren zu keinem Qualitätsverlust, obwohl der Anteil an gelöstem Bismut und Vanadium gegenüber dem Anteil an Feststoffen im zweiten Zyklus größer ist.

Der Wert ≥ 85 für jede der Farbkoordinaten b*, C* und L* bleibt auch dann erhalten, wenn in weiteren Zyklen in gleicher Weise wie im zweiten Zyklus das Filtrat in eine Suspension überführt, die Suspension zu Bismutvanadat umgesetzt, die Pigment-Suspension abgesaugt, das kontrolliert verdünnte Filtrat abgetrennt und das Bismutvanadat gewaschen und getrocknet wird.

Ein großer Vorteil des erfindungsgemäßen Verfahrens besteht nun darin, daß gegenüber EP-A 0 723 998 sowohl auf den Verdünnungsschritt als auch auf die 16-stündige Ruhephase am Ende der Bismutvanadat-Reaktion ohne Qualitätseinbuße verzichtet werden kann.

Der gegenüber dem bisherigen Verfahren um 10 bis 15 Gew.-% abgesenkte Säuregehalt macht die Suspension weniger aggressiv, so daß sich als weiterer Vorteil eine Verminderung des apparativen Verschleißes ergibt.

Von überragender Bedeutung ist die Einsparung an Salpetersäure. Sie beträgt ca. 84 Gew.-%. Aufgrund der gelösten Anteile werden zusätzlich ca. 8 Gew.-% an Bismut(III)oxid und ca. 3 Gew.-% an Vanadium(V)oxid eingespart.

Der entscheidende Vorteil der erfindungsgemäßen Herstellung von Bismutvanadat durch eine Rückführung des Filtrats ist in einer großtechnischen Nutzung zu sehen. So führt die Vermeidung von umweltbelastenden Reststoffen dazu, daß beispielhaft gegenüber dem in EP-A 0 723 998 beschriebenen Herstellverfahren pro 100 t Bismutvanadat-Pigment 250 t an Abfallsäure entfallen. Eine nachgeschaltete betriebliche Säureaufbereitung wird somit überflüssig. Das Waschwasser kann in ein bei Pigment-Herstellern übliches Entsorgungskonzept einbezogen werden.

Für eine großtechnische Nutzung der erfindungsgemäßen Herstellung von Bismutvanadat bietet sich als konventionelles Aggregat ein Rührkessel in Verbindung mit einem schnellaufenden Rührwerk an (Drehzahl ≥ 700 Upm). Hierbei fällt das Bismutvanadat-Pigment chargenweise an. Als Reaktor kann aber auch eine Rührwerkskugelmühle genutzt werden. Diese bietet den Vorteil, daß der zyklische Chargenbetrieb in eine kontinuierliche Fahrweise überführt werden kann, wenn eine wäßrige Salpetersäure kontinuierlich durch die Rührwerkskugelmühle geführt wird und vor der Rührwerkskugelmühle die Ausgangsprodukte kontinuierlich in die wäßrige Salpetersäure eingespeist werden und nach der Rührwerkskugelmühle Bismutvanadat über Filterpressen kontinuierlich der wäßrigen Salpetersäure entnommen wird.

Die Erfindung soll anhand des nachfolgenden Beispiels näher erläutert werden.

### Beispiel

Zur Herstellung von Bismutvanadat in mehreren Zyklen diente ein 1-Liter-Becherglas mit Abdeckung und Thermometer in Verbindung mit einem schnellaufenden Rührwerk (Mischturbine MS1 der Firma Kotthoff), dessen Rotor/Stator ca. 5 mm über dem Becherglasboden positioniert war.

In einem ersten Zyklus wurden unter Rühren (Drehzahl ca. 700 Upm) 137,6 g einer 65 Gew.-%igen Salpetersäure und 210,3 g Wasser bei Raumtemperatur vorgelegt und innerhalb von einer Minute 218,0 g Bi₂O₃ eingetragen. Nachdem sich innerhalb von 5 Minuten unter Wärmeentwicklung eine 50 bis 60°C heiße Suspension gebildet hatte, wurden 77,5 g V₂O₅ dispergiert. Das Rühren wurde fortgesetzt bis nach 15 bis 30 Minuten eine brillantgelbe Masse von sahneartiger Konsistenz entstanden war. Hierbei ist die Temperatur infolge weiterer Wärmeentwicklung bis auf 75°C angestiegen.

Nach dem Abkühlen auf eine Temperatur unterhalb von 30°C waren im Becherglas insgesamt 617,2 g Pigment-Suspension vorhanden. Gegenüber der Menge von 643,4 g an Ausgangsprodukten ergab sich ein Verlust von 26,2 g. Ein Mengenvergleich zwischen den Ausgangsprodukten und den Wiederfindungsraten im Filtrat und Waschwasser hat diesen Verlust als verdampftes Wasser ausgewiesen.

Die Pigmentsuspension wurde auf einer Nutsche über Blaubandfilter abgesaugt. Die Dichte dieses unverdünnten Filtrats betrug 1,285 g/ml. Danach wurde Wasser in Portionen von 20 ml zum Filterkuchen gegeben und in Intervallen abgesaugt und die einsetzende Filtratverdünnung anhand von Dichtemessungen verfolgt. Nachdem die Dichte um 6,5% auf 1,201 g/ml abgesunken war, wurde das verdünnte Filtrat abgetrennt. Die Menge betrug 350,6 g. Die chemische Analyse ergab eine wässrige Salpetersäure bestehend aus 80,0 g HNO₃ und 250,8 g Wasser, in der 17,7 g Bi₂O₃ und 2,1 g V₂O₅ gelöst waren.

Der auf der Nutsche verbliebene Filterkuchen wurde mit Wasser gewaschen bis die Leitfähigkeit unter 50 µS·cm⁻¹ lag. Hierfür waren 2,57 Liter erforderlich. Im Waschwasser wurden 9,7 g HNO₃ sowie 3,4 g Bi₂O₃ und 0,3 g V₂O₅ gefunden.

Nach Trocknung bei 120°C wurden im ersten Zyklus 262,3 g Bismutvanadat-Pigment erhalten. Das entsprach einer Ausbeute von 95,1%.

In einem zweiten Zyklus wurde die Bismut- und Vanadium-haltige wässrige Salpetersäure unter Rühren (Drehzahl ca. 700 Upm) in eine Suspension überführt, die in Menge und Stöchiometrie mit der im ersten Zyklus zu Bismutvanadat umgesetzten Suspension identisch war. Hierzu wurden zunächst 14,6 g einer 65 Gew.-%igen wäßrigen Salpetersäure und 2,5 g Wasser und danach 200,3 g Bi₂O₃ und 75,4 g V₂O₅ eingetragen. Die zeitliche Abfolge der Zugabe, der Umsatz zu Bismutvanadat, das Absaugen der gebildeten Pigment-Suspension, die Abtrennung eines kontrolliert verdünnten Filtrats, die Bismutvanadat-Wäsche und Trocknung geschahen in gleicher Weise wie im ersten Zyklus.

Der Temperatur-bedingte Wasserverlust betrug 24,8 g. Die Dichte des unverdünnten Filtrats war 1,278 g/ml. Im abgetrennten Filtrat war die Dichte um 6,2 % auf 1,199 g/ml erniedrigt. Die Filtratmenge betrug 347,6 g. Die chemische Analyse ergab eine wäßrige Salpetersäure bestehend aus 80,1 g HNO₃ und 251,0 g Wasser, in der 15,3 g Bi₂O₃ und 1,2 g V₂O₅ gelöst waren. Für die Pigmentwäsche wurden 2,73 Liter Wasser benötigt. Im Waschwasser waren 9,4 g HNO₃ sowie 5,8 g Bi₂O₃ und 0,5 g V2O5 enthalten. Im zweiten Zyklus fielen 264,6 g Bismutvanadat-Pigment an, was einer Ausbeute von 95,9% entsprach.

In einem dritten Zyklus wurde das Filtrat aus dem zweiten Zyklus zusammen mit 14,3 g einer 65 Gew.-%igen Salpetersäure und 2,4 g Wasser sowie 202,8 g Bi₂O₃ und 76,3 g V₂O₅ in gleicher Weise wie im zweiten Zyklus in eine Suspension überführt, die Suspension zu Bismutvanadat umgesetzt, die Pigment-Suspension abgesaugt, das kontrolliert verdünnte Filtrat abgetrennt und das Bismutvanadat gewaschen und getrocknet.

Der Wasserverlust betrug 25,4 g. Die Dichte des unverdünnten Filtrats war 1,287 g/ml. Im abgetrennten Filtrat war die Dichte um 6,4% auf 1,205 g/ml erniedrigt. Die Filtratmenge betrug 346,3 g. Die chemische Analyse ergab eine wäßrige Salpetersäure bestehend aus 78,9 g HNO₃ und 248,9 g Wasser, in der 16,8 g Bi₂O₃ und 1,7 g V₂O₅ gelöst waren. Für die Pigmentwäsche wurden 2,62 Liter Wasser benötigt. Im Waschwasser wurden 10,5 g HNO₃ sowie 4,2 g Bi₂O₃ und 0,3 g V₂O₅ gefunden. Im dritten Zyklus wurden 261,6 g Bismutvanadat erhalten. Das entsprach einer Ausbeute von 94,8%.

In einem vierten bis sechsten Zyklus wurde in gleicher Weise wie im dritten Zyklus verfahren. Die zugehörigen Zahlenwerte bewegten sich in einem den Zyklen 1 bis 3 entsprechenden Gebiet.

Eine chemische Analyse der kristallinen Bismutvanadat-Pigmente aus den Zyklen 1 bis 6 ergab stets die Zusammensetzung BiVO₄.

Zur Beurteilung der Farbqualität wurden die Bismutvanadat-Pigmente aus den Zyklen 1 bis 6 sowie ein nach EP-A 0 723 998 hergestelltes Material mit Hilfe einer Tellerausreibemaschine in einen lufttrocknenden Lack (Alkydal® F48, Bayer AG) eingearbeitet. Die Pigment-Konzentration betrug 10%. Der pigmentierte Lack wurde auf weißen Karton in deckender Schicht aufgezogen. Die Farbmessungen an den getrockneten Lackierungen erfolgten nach DIN 53236, Verfahren A, mit Hilfe eines Spektralfarbmeßgeräts. Für die Auswertung wurde das CIELAB-Farbsystem nach DIN 6174 herangezogen. Als Maß für die Farbqualität diente die Geibsättigung b*, das Chroma C* sowie die Helligkeit L*. Alle Lackierungen zeigten eine brillantgelbe Farbe. Die Farbkoordinaten b*, C* und L* erreichten stets Werte ≥ 85.

## Patentansprüche

1. Verfahren zur Herstellung von kristallinem Bismutvanadat in dem eine Bismut- und Vanadium-haltige salpetersaure Suspension einer Scherbeanspruchung unterworfen wird, die so gebildete Bismutvanadat-Suspension filtriert wird, das abfiltrierte Bismutvanadat-Material gewaschen und getrocknet wird, dadurch gekennzeichnet, daß die Herstellung des Bismutvanadats zyklenweise erfolgt, wobei ein Filtrat vor der Pigmentwäsche abgetrennt und im nachfolgenden Zyklus als Ausgangsmaterial für eine neue Bismut- und Vanadium-haltige salpetersaure Suspension unmittelbar eingesetzt wird.

2. Verfahren gemäß Anspruch 1, dadurch gekennzeichnet, daß das Filtrat in eine Suspension überführt wird, die in Menge und Stöchiometrie mit der im ersten Zyklus zu Bismutvanadat umgesetzten Suspension identisch ist.

3. Verfahren gemäß Anspruch 1, dadurch gekennzeichnet, daß zur Herstellung der Bismut- und Vanadium-haltigen salpetersauren Suspension in einem ersten Zyklus Salpetersäure und Wasser vorgelegt und von den Feststoffen zuerst Bismut(III)oxid oder Bismutylnitrat und danach Vanadium(V)oxid eingetragen und in den nachfolgenden Zyklen das Filtrat vorgelegt und von den Feststoffen zuerst Bismut(III)oxid und danach Vanadium(V)oxid eingetragen werden.

4. Verfahren gemäß Anspruch 1, dadurch gekennzeichnet, daß in einem ersten Zyklus von einer 20 bis 30 Gew.-%igen, vorzugsweise 22 bis 25 Gew.-%igen wäßrigen Salpetersäure ausgegangen wird und in den nachfolgenden Zyklen ein Filtrat verwendet wird, das aus einer 20 bis 30 Gew.-%igen wässrigen Salpetersäure besteht, in der unumgesetzte Bismut- und Vanadiumverbindungen in Mengen von 50 bis 100 g/l bzw. 1 bis 10 g/l gelöst sind.

5. Verfahren gemäß Anspruch 1, dadurch gekennzeichnet, daß der Feststoffanteil der Suspension in jedem Zyklus vorzugsweise zwischen 40 und 46 Gew.-%, besonders bevorzugt zwischen 42 und 44 Gew.-% liegt und das Molverhältnis Bismut zu Vanadium in der Säure bevorzugt 1,0 bis 1,2, besonders bevorzugt 1,08 bis 1,12 beträgt.

6. Verfahren gemäß Anspruch 1, dadurch gekennzeichnet, daß die Scherbeanspruchung in einem Behälter mit Rührwerk oder in einer Rührwerkskugelmühle oder in einem Behälter mit Ultraschallfinger durchgeführt wird.

7. Verfahren gemäß Anspruch 1, dadurch gekennzeichnet, daß die Herstellung kontinuierlich erfolgt, indem eine wäßrige Salpetersäure kontinuierlich durch eine Rührwerkskugelmühle geführt wird und vor der Rührwerkskugelmühle die Ausgangsprodukte kontinuierlich in die wäßrige Salpetersäure eingespeist werden und nach der Rührwerkskugelmühle Bismutvanadat über Filterpressen kontinuierlich der wäßrigen Salpetersäure entnommen wird.
